# EUROPEAN PATENT SPECIFICATION

(11) **EP 1 854 654 B1**
(45) Date of publication and mention of the grant of the patent: **25.04.2012**
(21) Application number: 07107827.3
(22) Date of filing: 09.05.2007
(51) Int. Cl.: B60K 17/35

(54) **Torque transmission apparatus for vehicle**
Drehmomentübertragungsvorrichtung für ein Fahrzeug
Appareil de transmission de couple pour véhicule

(30) Priority: 09.05.2006 JP 2006130470
(43) Date of publication of application: 14.11.2007
(73) Proprietor: GKN Driveline Torque Technology KK, Tochigi-ken (JP)
(72) Inventor: Kawano, Atsushi c/o GKN Driveline Torque Technology KK, Tochigi-ken (JP); Kurano, Toshiya c/o GKN Driveline Torque Technology KK, Tochigi-ken (JP); Fukuda, Hiromichi c/o GKN Driveline Torque Technology KK, Tochigi-ken (JP)
(74) Representative: Viering, Jentschura & Partner

(56) References cited:
- EP-A1- 0 247 008
- EP-A2- 0 246 926
- WO-A-2006/029684
- CN-Y- 2 759 827
- US-A- 4 895 236
- US-B1- 6 378 677

## Description

### BACKGROUND OF THE INVENTION

### 1. Field of the Invention

The present invention relates to a torque transmission apparatus for a vehicle.

### 2. Description of the Related Art

In prior art, Japanese Patent Laid-open Publication No. 2004-314796 discloses a power transmission apparatus for a four-wheel-drive vehicle, which is constructed so as to transmit a driving force of an engine to a differential device on the rear-wheel side through the intermediary of a differential casing of a front differential device (a differential device on the front-wheel side), a hollow shaft and a change-direction gear assembly.

In the disclosed power transmission apparatus, the front differential device is arranged in a transmission casing, while a clutch mechanism for limiting the differential motion of the front differential device is arranged on the opposite side of the transmission casing in the axial direction and outside a transfer casing.

The closest prior art document WO 2006/029684A, seems to disclose a torque transmission apparatus comprising: an input shaft (3) to which a torque of a motor is inputted; a torque transmission shaft (7) arranged so as to be relatively rotatable with respect to the input shaft; an output mechanism (5) that outputs the torque of the input shaft to an outside; a limited-slip differential mechanism (11) that limits a differential motion between the input shaft and the torque transmission shaft; and an accommodating casing (9) that accommodates the input shaft therein, wherein the accommodating casing further includes a first casing member (13), a second casing member (15) and a third casing member (17) arranged on the opposite side of the first casing member through the second casing member in an axial direction of the input shaft, the first casing member and the second casing member defining a first spatial part (19) for accommodating the output mechanism therein, the second casing member and the third casing member defining a second spatial part (20) for accommodating the limited-slip differential mechanism therein.

### SUMMARY OF THE INVENTION

In the above power transmission apparatus where the differential device is arranged in the transmission casing, since there is not adequate space to allow a limited-slip differential mechanism to be accommodated in the transmission casing, it is necessary to modify the design of the transmission casing drastically, causing a rise in the manufacturing cost.

Again, in a torque transmission apparatus for a four-wheel-drive vehicle, which is constructed on the ground of FF (front-engine front drive) vehicle, MR (midship-engine rear drive) vehicle and RR (rear-engine rear-drive) vehicle, there is a requirement to provide a compact torque transmission apparatus having a limited-slip differential mechanism that is not accompanied with a large-sized transmission casing.

In such a torque transmission apparatus, additionally, it is desirable that the apparatus allows the presence/absence of a limited-slip differential mechanism to be selected by only altering minimum members.

Still further, it is preferable that such a torque transmission apparatus shares a transmission casing forming a base structure with another torque transmission apparatus.

Therefore, an object of the present invention is to provide a torque transmission apparatus having a limited-slip differential mechanism, which is constructed at a low cost and compactly while suppressing an alteration of members on the side of the base structure.

According to the present invention, a torque transmission apparatus as claimed in claim 1 is provided. The subclaims show some examples of such an apparatus.

These and other objectives and features of the present invention will become more fully apparent from the following description and appended claims taken in conjunction with the accompanied drawings.

### BRIEF DESCRIPTION OF THE DRAWINGS

Fig. 1 is a sectional view showing a transfer in accordance with a first embodiment of the present invention;
Fig. 2 is a side view showing the transfer of Fig. 1;
Fig. 3 is a sectional view showing a substantial part of the transfer of Fig. 1;
Fig. 4 is an enlarged view of an electrical motor of Fig. 2;
Fig. 5 is a skeleton mechanical view showing a power system of a four-wheel-drive vehicle adopting the transfer of Fig. 1;
Fig. 6 is a sectional view showing a transfer in accordance with a second embodiment of the present invention;
Fig. 7 is a sectional view showing a transfer in accordance with a third embodiment of the present invention; and
Fig. 8 is a skeleton mechanical view showing a power system of a four-wheel-drive vehicle adopting the transfer of Fig. 7.

### DETAILED DESCRIPTION OF THE PREFERRED EMBODIMENTS

### [1^{st}. Embodiment]

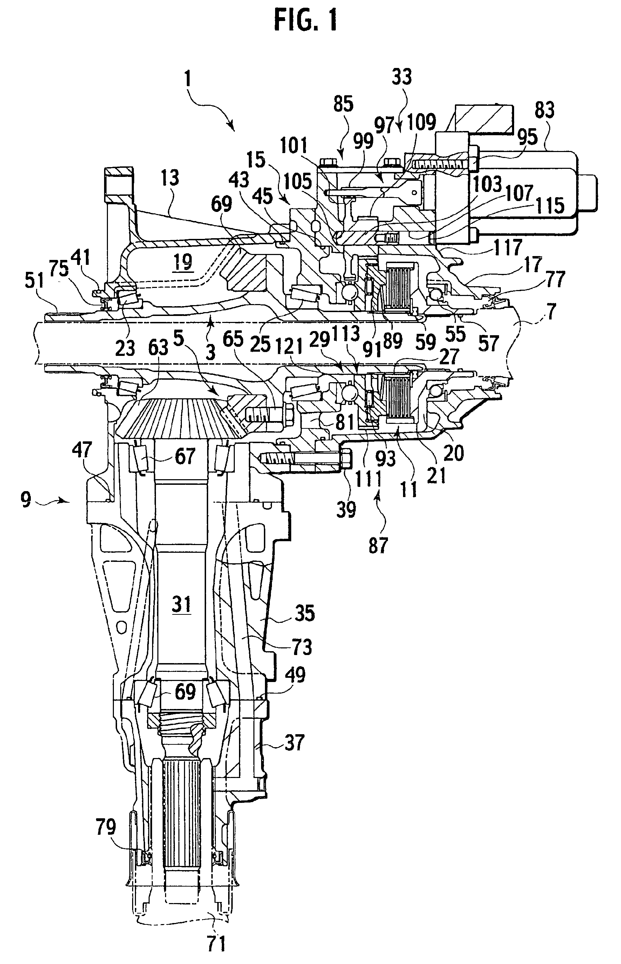

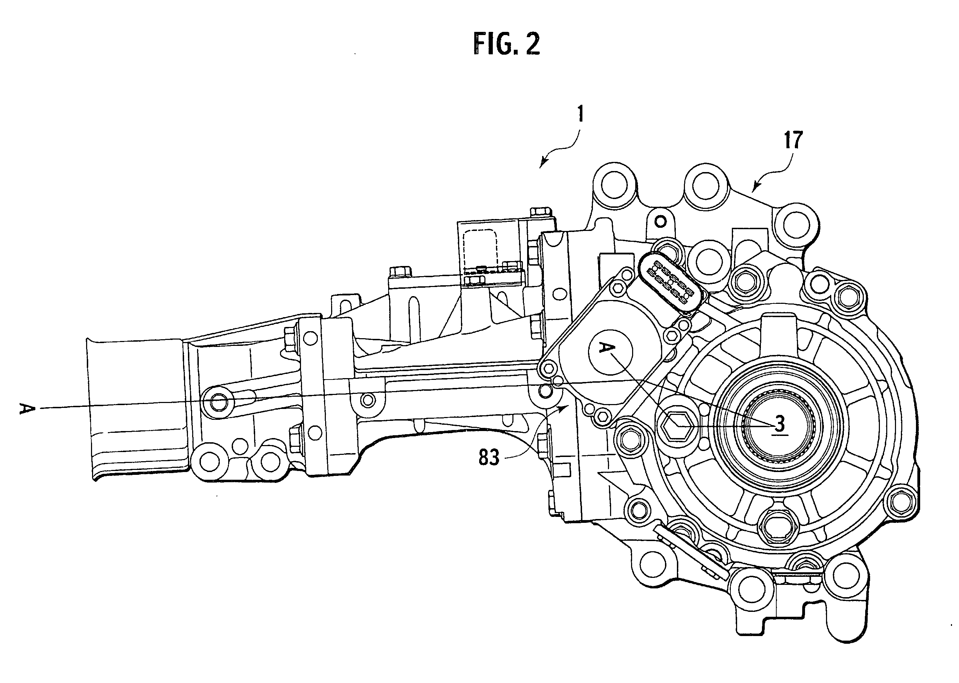

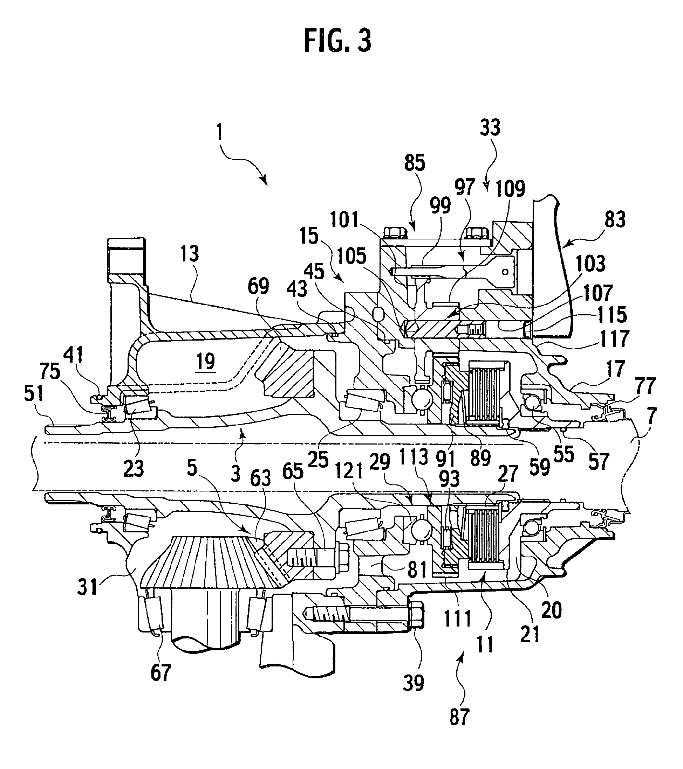

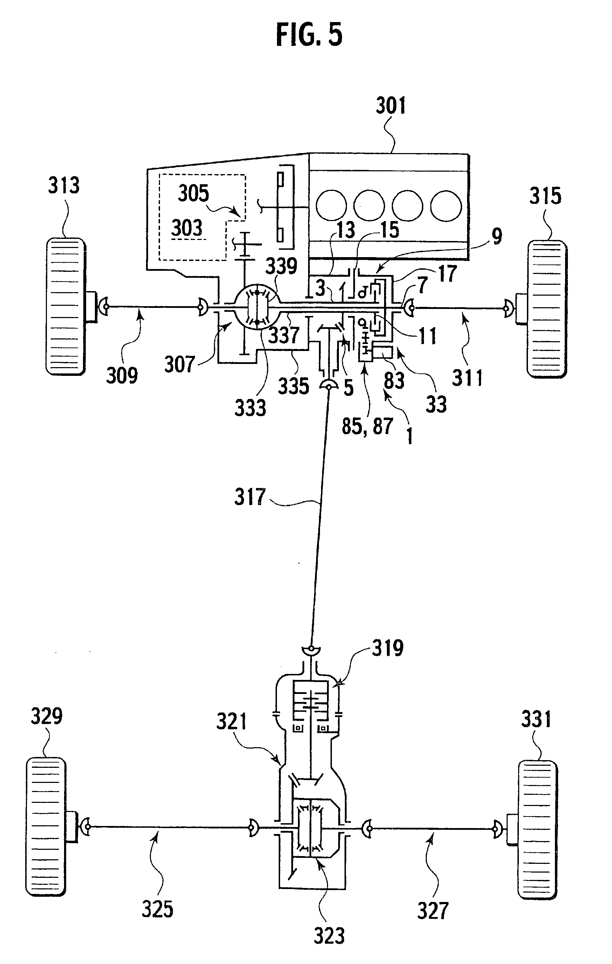

Referring to Figs. 1 to 5, a transfer 1 forming a torque transmission apparatus of the first embodiment of the present invention will be described below. The shown transfer 1 is used in a four-wheel-drive vehicle of Fig. 5, which is based on a FF (front-engine front drive) vehicle. Note that a left-and-right (horizontal) direction in Fig. 5 coincides with a left-and-right direction of this four-wheel-drive vehicle and also the same direction of Figs. 1 and 3. Note that Fig. 1 is a sectional view taken along a line A-A of Fig. 2.

### [Feature of Transfer 1]

The transfer 1 includes a hollow shaft 3 (input shaft) into which a torque of an engine 301 (motor) is inputted, a change-direction gear assembly 5 (output mechanism) for outputting the torque of the hollow shaft 3 to the outside, an axle 7 (torque transmission shaft) penetrating the hollow shaft 3 in their relative rotation (arranged so as to be relatively rotatable to the input shaft) and a transfer casing 9 (accommodating casing) accommodating these elements.

In the transfer 1, a multiplate clutch 11 (limited-slip differential mechanism) for limiting a differential motion between the hollow shaft 3 and the axle 7 is arranged in the transfer casing 9 in which oil is enclosed. In the transfer 1, again, the change-direction gear assembly 5 and the multiplate clutch 11 are lubricated in common use of this oil.

In the transfer 1, the transfer casing 9 is formed by a transfer casing body 13 (first casing member), a cover 15 (second casing member) and a clutch casing (third casing member). The change-direction gear assembly 5 is arranged in a space 19 (first spatial part) between the transfer casing body 13 and the cover 15, while the multiplate clutch 11 is arranged in a space 20 (second spatial part) between the cover 15 and the clutch casing 17.

In the vicinity of a later-mentioned bearing 25, there may be arranged a seal as an insulating mechanism between the cover 15 as the second casing member and the hollow shaft 3 as the input shaft in order to differentiate a lubricating system on the side of the input shaft and the same on the side of the limited-slip differential mechanism.

In the transfer 1, a clutch housing 21 (first rotating member on one side: radially-outside rotating member) is supported by an inner circumference of an end portion of the transfer casing 9. The hollow shaft 3 is supported by the transfer casing 9 through a bearing 23 and the bearing 25 both receiving thrust forces. A clutch hub 27 (second rotating member on the other side: radially-inside rotating member) is supported by the hollow shaft 3. Further, the transfer 1 contains a ball cam 29 (cam mechanism) operating the multiplate clutch 11. A cam thrust force of the ball cam 29 is received by an inner wall (the cover 15 and the clutch casing 17) of the transfer casing 9.

### [Constitution of Power System of Four-wheel-drive Vehicle]

As shown in Fig. 5, the power system of the above four-wheel-drive vehicle comprises an engine 301 (motor) and a transmission 303 both arranged in a front part of the vehicle sidewise, a reduction gear assembly 305, a front differential 307, front axles 309, 311, front wheels 313, 315, the transfer 1, a propeller shaft 317 on rear wheels' side, a coupling 319, a change-direction gear assembly 321, a rear differential 323, rear axles 325, 327, rear wheels 329, 331 and so on.

The driving force of the engine 301 is transmitted from the transmission 303 to the front differential 307 through the reduction gear assembly 305 and a differential casing 333. In succession, the so-transmitted driving force is distributed to the front wheels 313, 315 through the front axles 309, 311, respectively and also transmitted from the differential casing 333 to the coupling 319 through the transfer 1 and the propeller shaft 317 on rear wheels' side. If the coupling 319 is connected, the so-transmitted driving force is transmitted from the change-direction gear assembly 321 to the rear differential 323 and further distributed to the rear wheels 329, 331 through the rear axles 325, 327, establishing a four-wheel-driving condition in the vehicle. While, if the connection of the coupling 319 is released to bring the vehicle into a two-wheel-driving condition (front-wheel driving condition).

In the front differential 307, its limited-slip differential operation is carried out by the multiplate clutch 11 as follows.

### [Constitution of Transfer 1]

Besides the hollow shaft 3, the change-direction gear assembly 5, the axle 7, the transfer casing 9 and the multiplate clutch 11, the transfer 1 further includes a drive pinion shaft 31 (output shaft) and an actuator 33 for the multiplate clutch 11.

As shown in Fig. 1, the transfer casing 9 accommodating the transfer 1 is formed by the transfer casing body 13, the cover 15, the clutch casing 17, cylindrical casings 35, 37, etc. The transfer casing body 13, the cover 15 and the clutch casing 17 are fixed with each other by a bolt 39 integrally. The cylindrical casing 35 is fastened to the transfer casing body 13 by bolts, while the cylindrical casing 37 is fastened to the cylindrical casing 35 by bolts. The transfer casing 9 is fixed to the transmission casing 335 (Fig. 5) through a left side surface of the transfer casing body 13. In the above-mentioned fixations, their junctions are sealed up by O-rings 41, 43, 45 and 47, respectively.

The hollow shaft 3 is connected, through a spline part 51 at the left end, with a hollow shaft 337 on the side of the differential casing 333 in the front differential 307. The hollow shaft 3 is supported by the transfer casing body 13 through a bearing 23 and also supported by the cover 15 through a bearing 25. The axle 5 connects a right side gear 339 of the front differential 307 with a right front axle 311. The clutch housing 21 of the multiplate clutch 11 is spline-connected with an outer circumference of the axle 7 and also supported by the clutch casing 17 through a bearing 55 receiving the thrust force of the ball cam 29 via the multiplate clutch 11. The clutch hub 27 is spline-connected to an outer circumference of the hollow shaft 3. An O-ring 57 is arranged between the axle 7 and the clutch housing 21. The hollow shaft 3 penetrates the clutch hub 27 toward the clutch housing 21 (right hand). An X-ring 59 is disposed between a penetrating portion of the hollow shaft 3 and the clutch housing 21.

The change-direction gear assembly 5 consists of a bevel gear 61 and a bevel gear 63 both meshing with each other. The ring-shaped bevel gear 61 is fixed to a flange part pf the hollow shaft 3 by bolts 65, while the bevel gear 63 is formed integrally with a front end of the drive pinion shaft 31. The drive pinion shaft 31 is supported, on the side of its front end, by the transfer casing body 13 through a bearing 67 receiving a thrust force and also supported, on the side of the rear end, by the cylindrical casing 35 through a bearing 69 receiving the thrust force. Again, the drive pinion shaft 31 is connected to a propeller shaft 317 through a flange 71. The flange 71 is spline-connected to a rear end of the drive pinion shaft 31.

The transfer casing 9 is supplied with oil through an oil passage 73. By a seal 75 between the hollow shaft 3 and the transfer casing body 13, a seal 77 between the axle 7 and the clutch casing 17 and a seal 79 between the cylindrical casing 37 and the flange 71, the transfer casing 9 prevents the oil from leaking out and further prevents foreign particles from getting into the transfer casing body 13. Additionally, by the seal 75 between the hollow shaft 3 and the transmission casing 335, the O-ring 57 and the X-ring 59, the transfer casing 9 prevents transmission oil dissimilar in character from getting into the transfer casing body 13. Further, the cover 15 is provided with an opening 81 that promotes a flowage of oil toward the multiplate clutch 11.

The actuator 33 comprises the above ball cam 29, a reversible electrical motor 83, reduction gear assemblies 85, 87, a return spring 89(conical spring), a pressure plate 91 for the multiplate clutch 11, a bearing 93 receiving a thrust force, a controller (not shown), etc.

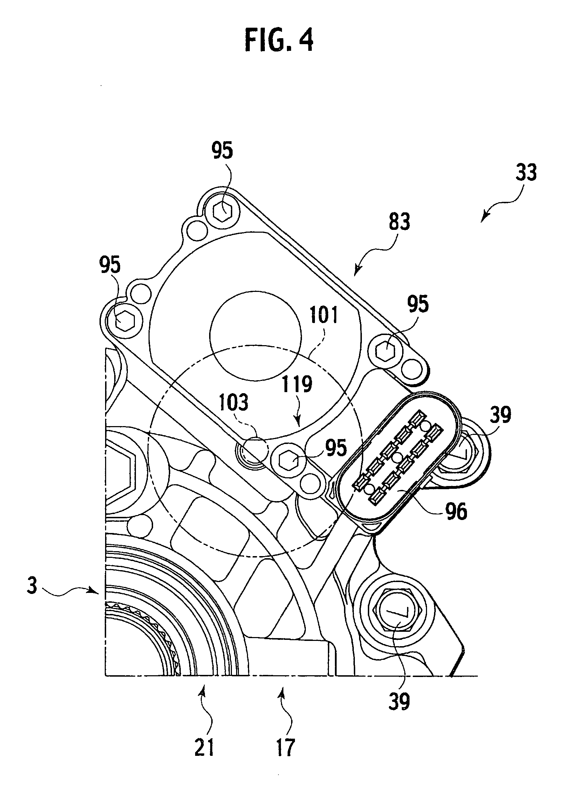

The electric motor 83 is fixed to the clutch casing 17 by bolts 95 and connected to an in-vehicle battery (not shown) through the intermediary of a connector 96 (Fig. 4). The electric motor 83 has an output shaft connected to a rotating shaft 97 whose left end is supported by the clutch casing 17. Outside the clutch casing 17, as shown in Fig. 2, the electric motor 83 is positioned on the rear side of the hollow shaft 3 in a projection plane of the clutch casing 17 in the direction of vehicle's width. Inside the clutch casing 17, the change-direction gear assembly 5 is arranged on the rear side of the hollow shaft 3. Therefore, the weight of the whole transfer 1 becomes larger on the rear side of the hollow shaft 3. Consequently, since there is no possibility that a heavyweight member is divided into one constituent on the front side of the hollow shaft 3 and another constituent on the rear side of the hollow shaft 3 in the projection plane of the clutch casing 17 in the direction of vehicle's width, it is possible to suppress a vibratory motion of the transfer 1 as a whole due to the rotation of the hollow shaft 3, improving the rigidity of the transfer 1 as a whole.

The reduction gear assembly 85 consists of a small-diametral gear 99 and a large-diametral gear 101 in mutual engagement. The small-diametral gear 99 is formed on the rotating shaft 97, while the large-diametral gear 101 is supported on a pin 103. The pin 103 has its both ends rotatably supported by the clutch casing 17 through a bearing hole 105 and a through-hole 107 both formed therein. While, the reduction gear assembly 87 consists of a small-diametral gear 109 and a large-diametral gear 111 in mutual engagement. The small-diametral gear 109 is formed integrally with the large-diametral gear 111. The large-diametral gear 111 is formed on the outer circumference of a cam ring 113.

Through the through-hole 107, the pin 103 is inserted into the small-diametral gear 99, the large-diametral gear 101 and the bearing hole 105. After inserting the pin 103, a bowl-shaped plug 115 is fitted in an opening of the through-hole 107, preventing the oil from leaking out and further preventing foreign particles from getting into the transfer casing body 13.

Additionally, as this embedding of the pin 103 into the through-hole 107 prevents a head part of the pin 103 from projecting from an attaching surface 117 of the clutch casing 17 for mounting the electrical motor 83, it becomes possible to arrange the pin 103 and the through-hole 107 inside an outer circumference 119 of the electrical motor 83, as shown in Fig. 3.

The ball cam 29 is arranged between a cam ring 113 and a cam ring 121 fixed on the cover 15. The return spring 89 is arranged between the pressure plate 91 and the clutch hub 27 to urge the plate 91 in a direction to release the connection of the multiplate clutch 11 (left hand in the figure). The bearing 93 is arranged between the pressure plate 91 and the cam ring 1.13 to insulate the rotation of the pressure plate 91 from the cam ring 113, preventing a malfunction of the ball cam 29.

The thrust force of the ball cam 29 is applied on the clutch casing 17 (an inner wall of the transfer casing 9) through the intermediary of the cam ring 113, the bearing 93, the pressure plate 91, the multiplate clutch 11, the clutch housing 21 and the bearing 55. While, a reaction force of the ball cam 29 is applied on the cover 15 (the inner wall of the transfer casing 9) through a cam ring 121.

In addition to an interrupting operation of the coupling 319, the controller carries out activation of the electrical motor 83, its shutdown, its counterrotating, etc. When activating the electrical motor 83, its rotation is reduced by the reduction gear assemblies 85, 87 (i.e. to increase a motor torque) to operate the ball cam 29. As a result, due to a cam thrust force, the bearing 93 and the pressure plate 91 move to the right in the axial direction, so that the multiplate clutch 11 is fastened under pressure to limit the differential motion of the front differential 307. Additionally, the controller controls a rotating angle of the electrical motor 83 (i.e. cam thrust force of the ball cam 29) to adjust a limited-slip differential force and subsequently stops the electrical motor 82.

Note that both rotating speed and rotating torque of the electrical motor 83 are controlled so that a limited-slip differential force on the left side of a vehicle differs from that on the right side of the vehicle in terms of its timing and magnitude, depending on a turning direction of the vehicle in spite of its identical behaviors. Because, the limited-slip differential mechanism is arranged between the front differential casing and the right axle and further, there is a little difference in mass balance between the left side of the vehicle and the right side.

When reversing the electrical motor 83 from the above condition, the cam ring 113 rotates in the opposite direction to disappear the cam thrust force of the ball cam 29, so that the fastening of the multiplate clutch 11 and the limited-slip differential operation of the front differential 307 are cancelled and thereafter, the operation of the electrical motor 83 is stopped.

### [Effect of Transfer 1]

According to the first embodiment, since the transfer 1 has the multiplate clutch 11 (limited-slip differential mechanism) arranged in the transfer casing 9, there is no need to allow the transmission casing 335 to have a built-in limited-slip differential mechanism, avoiding a rise in manufacturing cost with no need of modifying the transmission casing 335 to a large-size body.

In this way, as the first embodiment is not accompanied with the large-sized transmission casing, it is possible to provide a compact torque transmission apparatus including the multiplate clutch 11. (limited-slip differential mechanism), that is, a torque transmission apparatus comprising the transfer 1 and the transmission 303. The so-constructed torque transmission apparatus is suitable for a four-wheel-drive vehicle based on not only FF (front-engine front-drive) vehicle but MR (midship-engine rear-drive) vehicle and RR (rear-engine rear drive) vehicle.

Additionally, with no modification in the transmission casing 335, it can be converted to the other torque transmission apparatuses, accomplishing low-cost production of the apparatuses.

Further, as the oil enclosed in the transfer casing 9 is shared for the change-direction gear assembly 5, the multiplate clutch 11 and the reduction gear assemblies 85, 87, there is no need of preparing different oils for respective elements.

Still further, since the change-direction gear assembly 5 is arranged in a space 19 between the transfer casing body 13 of the transfer casing 9 and the cover 15 while the multiplate clutch 11 and the reduction gear assemblies 85, 87 are arranged in a space 20 between the cover 15 and the clutch casing 17, the change-direction gear assembly 5 and the multiplate clutch 11 can be assembled independently of each other and additionally, it becomes possible to easily attach and detach the multiplate clutch 11, the reduction gear assemblies 85, 87 and the electrical motor 83 to and from the change-direction gear assembly 5 without exerting an influence on it. Accordingly, it is possible to determine the presence/absence of the multiplate clutch 11 (limited-slip differential mechanism) by only modifying minimum members, allowing its applications to be expanded that much.

Since the multiplate clutch 11 (the clutch housing 21) is supported by the inner circumference of the end part of the transfer casing 9 (the clutch casing 17), it becomes easier to put on and take off the multiplate clutch 11.

With the above-mentioned supporting structure where the hollow shaft 3 is supported by the transfer casing 9 through the bearings 23, 25 while supporting the clutch hub 27 of the multiplate clutch 11, the supporting form of the hollow shaft 3 and the clutch hub 27 becomes strong that much, whereby both performance and durability of the multiplate clutch 11 can be maintained normally.

As shown in Fig. 1, the transfer 1 of the first embodiment is constructed so that the inner wall of the transfer casing 9 (i.e. the clutch casing 17 and the cover 15) receives the cam thrust force and the cam reactive force produced in the ball cam 29, in other words, the cam thrust force and the cam reactive force doe not exert an influence on the outside of the clutch casing 17 and the cover 15. In addition to the structure, as the transfer 1 is adapted so as to insulate these thrust forces from the change-direction gear assembly 5 (meshing part between the bevel gears 61. 63), the gears 61, 63 are maintained in terms of meshing condition, durability, performance and so on, normally.

Again, as the pin 103 supporting the large-diametral gear 101 of the reduction gear assembly 85 is arranged inside the outer circumference 119 of the electrical motor 83, there is no need of enlarging the diameter of the large-diametral gear 101 unnecessarily in order to avoid an interference of the electrical motor 83 with the pin 103, the reduction gear assembly 85 is formed lightly and compactly. Thus, this arrangement allows the electrical motor 83 to be positioned more inwardly in the radial direction, so that the transfer 1 can be downsized to improve its "in-vehicle" loading easiness.

Again, as the through-hole 107 is positioned inside the outer circumference 119 of the electrical motor 83, it serves to prevent the pin 103 and the plug 115 from falling down. Thus, there is no need of providing fallout-proof members for these elements, so that the number of components of the transfer 1 and its manufacturing cost are together reduced with an improvement in weight saving.

Furthermore, since the multiplate clutch 11 has the actuator 33 for controlling the torque of the engine 301, which is supported by the outer circumference of the clutch casing 17, it becomes easy to assemble and disassemble the actuator to and from the torque transmission apparatus.

Further, since the change-direction gear assembly 5 includes the drive pinion shaft 31 perpendicular to the hollow shaft 3; the transfer casing body 13 includes the transfer casing 9 extending toward the drive pinion shaft 31; and the actuator 33 is arranged in an overlapping area between an outside area of the clutch casing 17 and an outside area of the transfer casing 9, it is possible to prevent the actuator 33 from projecting in the transfer 1, preventing an interference of the actuator 33 with peripheral equipments, such as the engine 301 and a vehicle body. Consequently, the in-vehicle loading easiness of the transfer 1 can be improved. Additionally, since the actuator 33 is arranged on the opposite side of the engine 301 over the clutch casing 17 (see Fig. 5), the actuator 33 is hardly affected by heat of the engine 301, so that the control characteristics of the actuator 33 can be maintained in good condition.

Further, since the actuator 33 includes the ball cam 29; the multiplate clutch 11 is joined on receipt of the thrust force produced in the ball cam 29; the reactive thrust force produced in the ball cam 29 is received by the cover 15, it is possible to receive the reactive thrust force through the use of the cover 15 certainly. As the actuator 33 operates between the cover 15 and the clutch casing 17, the structure of the transfer 1 can be simplified in comparison with an arrangement where the actuator is accommodated in a single casing, providing a compact constitution as a whole.

### [2n^{d}. Embodiment]

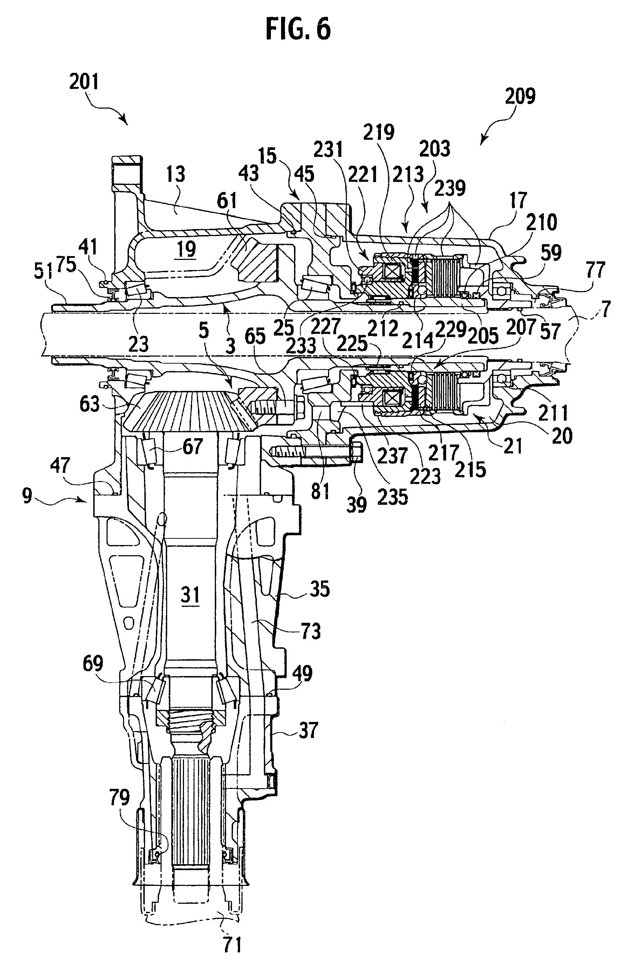

Referring to Figs. 5 and 6, a transfer 201 forming a torque transmission apparatus of the second embodiment will be described below. The shown transfer 201 can be used by replacing the transfer 1 in the four-wheel-drive vehicle of Fig. 5. Again, this vehicle is a four-wheel-drive based on a FF (front-engine front drive) vehicle. Note that the left-and-right (horizontal) direction in Fig. 5 coincides with a left-and-right direction of this four-wheel-drive vehicle and also the same direction of Fig. 6. Further, clement identical to those of the first embodiment are indicated with the same reference numerals, respectively.

### [Feature of Transfer 201]

The transfer 201 includes the hollow shaft 3 (i.e. the input shaft) into which a torque of the engine 301 (the motor) is inputted, the change-direction gear assembly 5 (the output mechanism) for outputting the torque of the hollow shaft 3 to the outside, the axle 7 (the torque transmission shaft) penetrating the hollow shaft 3 in their relative rotation (arranged so as to be relatively rotatable to the input shaft) and the transfer casing 9 (the accommodating casing) accommodating these elements.

In the transfer 1, a main clutch 203 (the limited-slip differential mechanism) for limiting a differential motion between the hollow shaft 3 and the axle 7 is arranged in the transfer casing 9 in which oil is enclosed. In the transfer 201, again, the change-direction gear assembly 5 and the main clutch 203 are lubricated in common use of this oil. In connection, the second casing member may be provided, as an insulating mechanism, with a seal similar to the first embodiment in order to differentiate a lubricating system on the side of the output mechanism and the same on the side of the limited-slip differential mechanism.

In the transfer 201, the transfer casing 9 is formed by the transfer casing body 13 (the first casing member), the cover 15 (the second casing member) and the clutch casing 17 (the third casing member). The change-direction gear assembly 5 is arranged in the space 19 (the first spatial part) between the transfer casing body 13 and the cover 15, while the main clutch 203 is arranged in the space 20 (the second spatial part) between the cover 15 and the clutch casing 17.

In the transfer 201, the clutch housing 21 (the first rotating member on one side: radially-outside rotating member) of the main clutch 203 is supported by the inner circumference of the end portion of the transfer casing 9. The hollow shaft 3 is supported by the transfer casing 9 through the bearings 23, 25 both receiving thrust forces. A clutch hub 205 (the second rotating member on the other side: radially-inside rotating member) of the main clutch 203 is supported by the hollow shaft 3. Further, the transfer 1 contains a ball cam 207 (the cam mechanism) operating the main clutch 203. A cam thrust force of the ball cam 207 is received by the inner wall (the cover 15 and the clutch casing 17) of the transfer casing 9.

### [Constitution of Power System of Four-wheel-drive Vehicle]

As shown in Fig. 4, the power system of the above four-wheel-drive vehicle comprises the engine 301 (the motor) and the transmission 303 both arranged in a front part of the vehicle sidewise, the reduction gear assembly 305, the front differential 307, the front axles 309, 311, the front wheels 313, 315, the transfer 201, the propeller shaft 317 on rear wheels' side, the coupling 319, the change-direction gear assembly 321, the rear differential 323, the rear axles 325, 327, the rear wheels 329, 331 and so on.

The driving force of the engine 301 is transmitted from the transmission 303 to the front differential 307 through the reduction gear assembly 305 and the differential casing 333. In succession, the so-transmitted driving force is distributed to the front wheels 313, 315 through the front axles 309, 311, respectively and also transmitted from the differential casing 333 to the coupling 319 through the transfer 201 and the propeller shaft 317 on rear wheels' side. If the coupling 319 is connected, the so-transmitted driving force is transmitted from the change-direction gear assembly 321 to the rear differential 323 and further distributed to the rear wheels 329, 331 through the rear axles 325, 327, establishing a four-wheel-driving condition in the vehicle. While, if the connection of the coupling 319 is released, then the vehicle is brought into a two-wheel-driving condition (front-wheel driving condition).

In the front differential 307, its limited-slip differential operation is carried out by the main clutch 203 of the transfer 201 as follows.

### [Constitution of Transfer 201]

Besides the hollow shaft 3, the change-direction gear assembly 5, the axle 7, the transfer casing 9 and the main clutch 203, the transfer 201 further includes the drive pinion shaft 31 and an electromagnetic actuator 209 for the main clutch 203.

As shown in Fig. 5, the transfer casing 9 accommodating the transfer 201 is formed by the transfer casing body 13, the cover 15, the clutch casing 17, the cylindrical casings 35, 37, etc. The transfer casing body 13, the cover 15 and the clutch casing 17 are fixed with each other by a bolt 39 integrally. The cylindrical casing 35 is fastened to the transfer casing body 13 by bolts, while the cylindrical casing 37 is fastened to the cylindrical casing 35 by bolts. The transfer casing 9 is fixed to the transmission casing 335 (Fig. 5) through the left side surface of the transfer casing body 13. In the above-mentioned fixations, their junctions are sealed up by the O-rings 41, 43, 45 and 47, respectively.

The hollow shaft 3 is connected, through the spline part 51 at the left end, with the hollow shaft 337 on the side of the differential casing 333 in the front differential 307. The hollow shaft 3 is supported by the transfer casing body 13 through the bearing 23 and also supported by the cover 15 through the bearing 25. The axle 5 connects the right side gear 339 of the front differential 307 with the right front axle 311. The clutch housing 21 of the main clutch 203 is spline-connected with an outer circumference of the axle 7 and also supported by the clutch casing 17 through a ball bearing 211. The clutch hub 205 is spline-connected to the outer circumference of the hollow shaft 3 and also supported by the clutch housing 21 through a ball bearing 210. The O-ring 57 is arranged between the axle 7 and the clutch housing 21. The X-ring 59 is disposed between the clutch housing 21 and the clutch hub 205. An O-ring 212 is arranged between the hollow shaft 3 and the clutch hub 205.

The change-direction gear assembly 5 consists of the bevel gear 61 and the bevel gear 63 both meshing with each other. The ring-shaped bevel gear 61 is fixed to the flange part of the hollow shaft 3 by the bolts 65, while the bevel gear 63 is formed integrally with the front end of the drive pinion shaft 31. The drive pinion shaft 31 is supported, on the side of its front end, by the transfer casing body 13 through the bearing 67 receiving the thrust force and also supported, on the side of the rear end, by the cylindrical casing 35 through the bearing 69 receiving the thrust force. Again, the drive pinion shaft 31 is connected to the propeller shaft 317 through the flange 71. The flange 71 is spline-connected to the rear end of the drive pinion shaft 31.

The transfer casing 9 is supplied with oil through the oil passage 73. By the seal 75 between the hollow shaft 3 and the transfer casing body 13, the seal 77 between the axle 7 and the clutch casing 17 and the seal 79 between the cylindrical casing 37 and the flange 71, the transfer casing 9 prevents the oil from leaking out and further prevents foreign particles from getting into the transfer casing body 13. Additionally, by the seal 75 between the hollow shaft 3 and the transmission casing 335, the O-rings 57, 212 and the X-ring 59, the transfer casing 9 prevents transmission oil dissimilar in character from getting into the transfer casing body 13. Further, the cover 15 is provided with the opening 81 that promotes a flowage of oil toward the main clutch 203.

The electromagnetic actuator 209 comprises the above ball cam 207, a multiplate pilot clutch 213, a cam ring 214, a pressure plate 215, an armature 217, a rotor 219 made of magnetic material, an electromagnetic coil 221, a return spring, a controller and so on.

The pilot clutch 213 is arranged between the clutch housing 21 and the cam ring 214. The ball cam 207 is arranged between the cam ring 214 and the pressure plate 215. The armature 217 is arranged between the pilot clutch 213 and the pressure plate 215 so as to be movable in the axial direction. The cam ring 214 is supported by the outer circumference of the clutch hub 205. The pressure plate 215 is spline-connected to the outer circumference of the clutch hub 205. The rotor 219 is connected to the clutch housing 21 by screws and also positioned through the use of double-nut function of a nut 223. Again, the rotor 219 is supported by the outer circumference of the clutch hub 205 through a needle bearing 225.

Further, there are respectively arranged a bearing 227 between the rotor 219 and the cover 15 and another bearing 229 between the rotor 219 and the cam ring 214. The cam reactive force of the ball cam 207 is applied on the cover 15 (i.e. the inner wall of the transfer casing) through these members, while the cam thrust force of the ball cam 207 is applied on the clutch casing 17 (the inner wall of the transfer casing) through the pressure plate 215, the main clutch 203, the clutch housing 21. and the bearing 211.

The electromagnetic coil 221 has a core 231 fitted into a recess of the rotor 219 through an appropriate clearance (air gap). The core 231 is supported on the rotor 219 by a ball bearing 231. The rotating of the core 231 is restricted by a whirl-stop member 237 engaging with a recess 235 of the cover 15. The clutch housing 21 is provided with openings 239 that promote inflow/outflow of oil to enhance lubricating/cooling effects of the main clutch 203, the pilot clutch 213, the ball cam 207 and the bearings 210, 229.

In addition to the interrupting operation of the coupling 319, the controller carries out excitation of the electromagnetic coil 221, control of exciting current and shut-down of the exciting current. A magnetic path of the electromagnetic coil 221 is formed by the core 231, the rotor 219, the pilot clutch 213 and the armature 217. When the electromagnetic coil 221 is excited, a flux loop is formed in the magnetic path. Consequently, the attracted armature 217 presses the pilot clutch 213 to its joined state. In succession, the main clutch 203 is pressed through the pressure plate 215 by a cam thrust force of the ball cam 207 operated as a result of receiving a torque, so that the differential motion of the front differential 307 is limited. While, when the excitation of the electromagnetic coil 221 is stopped, the connection of the main clutch 203 and the limited-slip differential operation of the front differential 307 are cancelled. In a modification, there may be arranged a seal as the insulating mechanism between the outside rotating member (formed by the clutch housing 21 and the rotor 219) and the inside rotating member (formed by the clutch hub 205) in order to form an independent lubricating structure.

### [Effect of Transfer 201]

According to the second embodiment, since the transfer 201 has the main clutch 203 (the limited-slip differential mechanism) arranged in the transfer casing 9, there is no need to allow the transmission casing 335 to have a built-in limited-slip differential mechanism, avoiding a rise in manufacturing cost with no need of modifying the transmission casing 335 to a large-size body.

In this way, as the second embodiment is not accompanied with the large-sized transmission casing, it is possible to provide a compact torque transmission apparatus including the main clutch 203 (the limited-slip differential mechanism), that is, a torque transmission apparatus comprising the transfer 201 and the transmission 303. The so-constructed torque transmission apparatus is suitable for not only FF (front-engine front-drive) vehicle but MR (midship-engine rear-drive) vehicle and RR (rear-engine rear drive) vehicle.

Additionally, with no modification in the transmission casing 335, it can be converted to the other torque transmission apparatuses, accomplishing low-cost production of the apparatuses.

Further, as the oil enclosed in the transfer casing 9 is shared for the change-direction gear assembly 5 and the main clutch 203, there is no need of preparing different oils for respective elements.

Still further, since the change-direction gear assembly 5 is arranged in the space 19 between the transfer casing body 13 of the transfer casing 9 and the cover 15 while the main clutch 203 and the electromagnetic actuator 209 are arranged in the space 20 between the cover 15 and the clutch casing 17, the change-direction gear assembly 5 and the main clutch 203 can be assembled independently of each other and additionally, it becomes possible to easily attach and detach the main clutch 203 and the electromagnetic actuator 209 (i.e. the pilot clutch 203, the ball cam 207, the cam ring 214, the pressure plate 215, the armature 217, the rotor 219, the return spring, the electromagnetic coil 221) to and from the change-direction gear assembly 5 without exerting an influence on it. Accordingly, it is possible to determine the presence/absence of the main clutch 11 (the limited-slip differential mechanism) by only modifying minimum members, allowing its applications to be expanded that much.

Since the main clutch 203 (the clutch housing 21) is supported by the inner circumference of the end part of the transfer casing 9 (the clutch casing 17), it becomes easier to put on and take off the electromagnetic actuator 209 (e.g. the main clutch 203 etc.).

With the above-mentioned supporting structure where the hollow shaft 3 is supported by the transfer casing 9 through the bearings 23, 25 while supporting the clutch hub 27 of the main clutch 203, the supporting form of the hollow shaft 3 and the clutch hub 205 becomes strong that much, whereby both performance and durability of the main clutch 203 can be maintained normally.

As shown in Fig. 6, the transfer 201 of the second embodiment is constructed so that the inner wall of the transfer casing 9 (i.e. the clutch casing 17 and the cover 15) receives the cam thrust force and the cam reactive force produced in the ball cam 207, in other words, the cam thrust force and the cam reactive force have an influence on the outside of the clutch casing 17 and the cover 15. In addition to the structure, as the transfer 201 is adapted so as to insulate these thrust forces from the change-direction gear assembly 5 (the meshing part between the bevel gears 61, 63), the gears 61, 63 are maintained in terms of meshing condition, durability, performance and so on, normally.

Furthermore, the main clutch 203 includes the electromagnetic actuator 209 for controlling the torque of the engine 301 and additionally, the actuator 209 is arranged on the side of one end of the clutch casing 17 so as to oppose the wall part of the cover 15 and also prevented from rotating, while the main clutch 203 is arranged on the side of the other end of the clutch casing 17. Thus, as a suppression of a projection of the outer circumference of the other end of the clutch casing 17 allows the torque transmission apparatus 201 to have its center of gravity close to one end of the clutch casing 17, it is possible to prevent both controllability and durability of the actuator 209 against vibrations from deteriorating. Additionally, as the arrangement of the main clutch 203 on the side of the other end of the clutch casing 17 facilitates contact of the main clutch 203 with atmosphere, the heat radiation of the actuator 209 can be improved to enhance the control stability of the transfer 201.

Additionally, since the main clutch 203 is supported by the hollow shaft 3 through the connecting spline part in the radial direction; the hollow shaft 3 has its one end supported by the cover 15 through the bearing; and the other side of the main clutch 203 is supported by the clutch casing 17 through the other bearing, it is possible to reduce the number of components since the bearing 25 for the hollow shaft 3 serves to support one end of the main clutch 203. Further, since the clutch casing 17 supports the other end of the main clutch 203, the stability in supporting the rotating main clutch 203 can be improved.

### [3^{rd}. Embodiment]

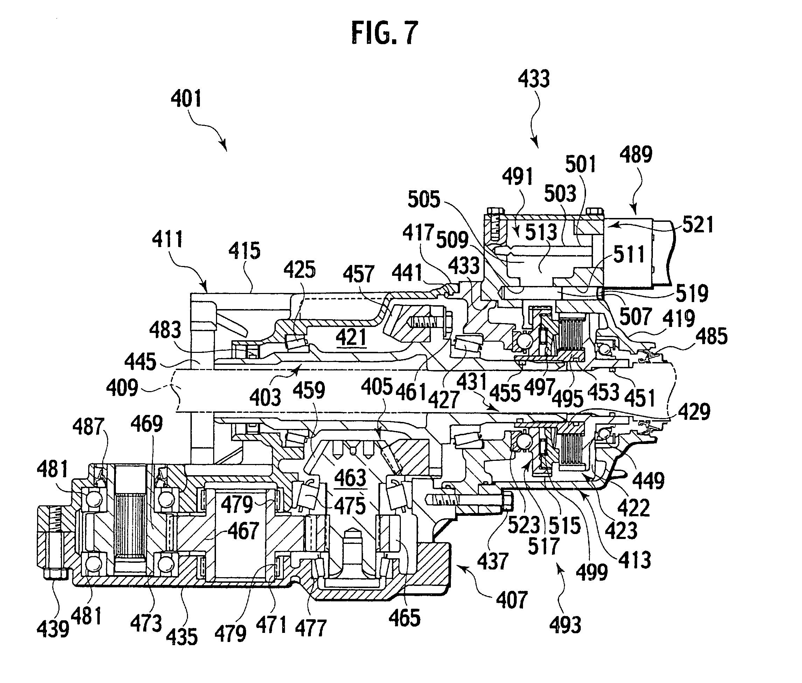

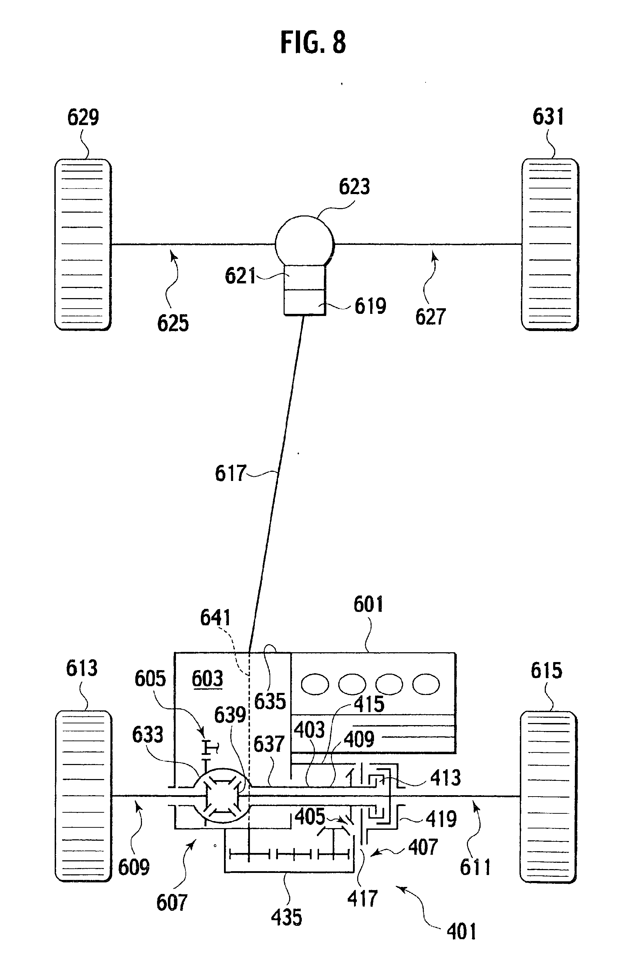

Referring to Figs. 7 and 8, a transfer 401 forming a torque transmission apparatus of the third embodiment will be described below. The shown transfer 401 is used in a four-wheel-drive vehicle of Fig. 8. Again, this vehicle is a four-wheel-drive based on a RR (rear-engine rear drive) vehicle. Note that the left-and-right (horizontal) direction coincides with a left-and-right direction of this four-wheel-drive vehicle and also the same direction of Fig. 8. Further, element identical to those of the first embodiment are indicated with the same reference numerals, respectively.

### [Feature of Transfer 401]

The transfer 401 includes a hollow shaft 403 (i.e. the input shaft) into which a torque of an engine 601 (the motor) is inputted, a gear drive mechanism 407 (the output mechanism) formed by a change-direction gear assembly 405 (the output mechanism) for outputting the torque of the hollow shaft 403 to the outside and a triple gears, an axle 409 (the torque transmission shaft) penetrating the hollow shaft 403 in their relative rotation (arranged so as to be relatively rotatable to the input shaft) and a transfer casing 411 (the accommodating casing) accommodating these elements.

In the transfer 401, a multiplate clutch 413 (the limited-slip differential mechanism) for limiting a differential motion between the hollow shaft 403 and the axle 409 is arranged in the transfer casing 411 in which oil is enclosed. In the transfer 401, again, the change-direction gear assembly 405 and the multiplate 413 are lubricated in common use of this oil.

In the transfer 401, the transfer casing 411 is formed by a transfer casing body 415 (the first casing member), a partition cover 417 (the second casing member) and a clutch casing 419 (the third casing member). The change-direction gear assembly 405 and the gear drive mechanism 407 are arranged in a space 421 (the first spatial part) between the transfer casing body 415 and the cover 417, while the multiplate clutch 413 is arranged in a space 422 (the second spatial part) between the cover 417 and the clutch casing 419.

In the transfer 401, the clutch housing 423 (the first rotating member on one side: radially-outside rotating member) of the multiplate clutch 413 is supported by the inner circumference of an end portion of the transfer casing 411. The hollow shaft 403 is supported by the transfer casing 411 through bearings 425, 427 both receiving thrust forces. A clutch hub 429 (the second rotating member on the other side: radially-inside rotating member) of the multiplate clutch 413 is supported by the hollow shaft 403. Further, the transfer 401 contains a ball cam 431 (the cam mechanism) operating the multiplate clutch 413. A cam thrust force of the ball cam 431 is received by the inner wall (the cover 417 and the clutch casing 419) of the transfer casing 411.

### [Constitution of Power System of Four-wheel-drive Vehicle]

As shown in Fig. 8, the power system of the above four-wheel-drive vehicle comprises the engine 601 (the motor) and a transmission 603 both arranged in a rear part of the vehicle sidewise, a reduction gear assembly 605, a front differential 607, rear axles 609, 611, rear wheels 613, 615, the transfer 401, a propeller shaft 617 on front wheels' side, a coupling 61.9, a change-direction gear assembly 621, a front differential 623, front axles 625, 627, front wheels 629, 632 and so on.

The driving force of the engine 601 is transmitted from the transmission 603 to the front differential 607 through the reduction gear assembly 605 and the differential casing 633. In succession, the so-transmitted driving force is distributed to the rear wheels 613, 615 through the rear axles 609, 611, respectively and also transmitted from the differential casing 633 to the coupling 619 through the transfer 401 and the propeller shaft 617. If the coupling 619 is connected, the so-transmitted driving force is transmitted from the change-direction gear assembly 621 to the rear differential 623 and further distributed to the front wheels 629, 631 through the front axles 625, 627, establishing a four-wheel-driving condition in the vehicle. While, if the connection of the coupling 619 is released, then the vehicle is brought into a two-wheel-driving condition (rear-wheel driving condition).

In the rear differential 607, its limited-slip differential operation is carried out by the multiplate clutch 203 of the transfer 401 as follows.

### [Constitution of Transfer 401]

Besides the hollow shaft 403, the change-direction gear assembly 405, the gear drive mechanism 407, the axle 409, the transfer casing 411 and the multiplate clutch 413, the transfer 401 further includes an actuator 433 for the multiplate clutch 413.

As shown in Fig. 7, the transfer casing 411 accommodating the transfer 401 is formed by the transfer casing body 415, the partition cover 417, the clutch casing 419, an end cover 435 and so on. The transfer casing body 415, the cover 417 and the clutch casing 419 are fixed with each other by a bolt 439 integrally. The end cover 435 is fixed to the transfer casing body 415 by a bolt 439. The transfer casing 411 is fixed to a transmission casing 635 (Fig. 8) through the left side surface of the transfer casing body 415. In the above-mentioned fixations, their junctions are sealed up by O-rings 441, 443, respectively.

The hollow shaft 403 is connected, through a spline part 445 at the left end, with the hollow shaft 637 on the side of the differential casing 633 in the rear differential 607. The hollow shaft 403 is supported by the transfer casing body 415 through the bearing 425 and also supported by the partition cover 417 through the bearing 427. The axle 5 connects a right side gear 339 of the rear differential 607 with the right rear axle 611. The clutch housing 423 of the multiplate clutch 413 is spline-connected with an outer circumference of the axle 409 and also supported by the clutch casing 419 through a bearing 449 that receives a thrust force of the bam cam 431 through the multiplate clutch 413. The clutch hub 419 is spline-connected to the outer circumference of the hollow shaft 403. An O-ring 451 is arranged between the axle 409 and the clutch housing 423. An X-ring 453 is disposed between the clutch housing 423 and the clutch hub 429. An O-ring 455 is arranged between the hollow shaft 403 and the clutch hub 429.

The change-direction gear assembly 405 consists of a bevel gear 457 and a bevel gear 459 both meshing with each other. The ring-shaped bevel gear 457 is fixed to a flange part of the hollow shaft 403 by bolts 461, while the bevel gear 459 is formed integrally with the front end of a drive pinion shaft 463.

The gear drive mechanism 407 is formed by gears 465, 467, 469 meshing with each other in this order. The gear 465 is spline-connected to the drive pinion shaft 463, while the gears 467, 469 are formed integrally with hollow shafts 471, 473, respectively. The drive pinion shaft 463 is supported by the transfer casing body 415 and the end cover 435 through bearings 475, 477 receiving thrust forces. The hollow shaft 471 is supported by the transfer casing body 415 and the end cover 435 through needle bearings 479, 479, respectively. The hollow shaft 473 is supported by the transfer casing body 415 and the end cover 435 through ball bearings 481, 481, respectively. The hollow shaft 473 is connected to the propeller shaft 617 through a transmission shaft 641 (see Fig. 8) spline-connected with an inner circumference of the shaft 473.

The transfer casing 411 is filled up with oil. By a seal 483 between the hollow shaft 403 and the transfer casing body 415, a seal 485 between the axle 409 and the clutch casing 419 and a seal 487 between the transfer casing body 415 and the hollow shaft 473, the transfer casing 411 prevents the oil from leaking out and further prevents foreign particles from getting into the transfer casing body 415. Additionally, by the seal 483 between the hollow shaft 473 and the transmission casing 635, the O-rings 451, 455 and the X-ring 453, the transfer casing 411 prevents transmission oil dissimilar in character from getting into the transfer casing body 415. Further, the cover 417 is provided with an opening that promotes a flowage of oil toward the multiplate clutch 413.

The actuator 433 comprises the above ball cam 431, a reversible electrical motor 489, reduction gear assemblies 491, 493, a return spring 495 (conical spring), a pressure plate 497 for the multiplate clutch 413, a bearing 499 receiving a thrust force, a controller (not shown), etc.

The electric motor 489 is fixed to the clutch casing 419 by bolts. The electric motor 489 has an output shaft connected to a rotating shaft 501 whose left end is supported by the clutch casing 419. The reduction gear assembly 491 consists of a small-diametral gear 503 and a large-diametral gear 505 in mutual engagement. The small-diametral gear 503 is formed on the rotating shaft 501, while the large-diametral gear 505 is supported on a pin 507. The pin 507 has its both ends rotatably supported by the clutch casing 419 through a bearing hole 509 and a through-hole 511 both formed therein. While, the reduction gear assembly 493 consists of a small-diametral gear 513 and a large-diametral gear 515 in mutual engagement. The small-diametral gear 513 is formed integrally with the large-diametral gear 505. The large-diametral gear 515 is formed on the outer circumference of a cam ring 517.

Through the through-hole 511, the pin 507 is inserted into the small-diametral gear 513, the large-diametral gear 505 and the bearing hole 509. After inserting the pin 507, a bowl-shaped plug 519 is fitted in an opening of the through-hole 511, preventing the oil from leaking out and further preventing foreign particles from getting into the transfer casing body 415.

Additionally, as this embedding of the pin 507 into the through-hole 511 prevents a head part of the pin 507 from projecting from an attaching surface 521 of the clutch casing 419 for mounting the electrical motor 489, it becomes possible to arrange the pin 507 and the through-hole 511 inside an outer circumference of the electrical motor 489.

The ball cam 431 is arranged between a cam ring 517 and a cam ring 523 fixed on the cover 417. The return spring 495 is arranged between the pressure plate 497 and the clutch hub 429 to urge the plate 497 in a direction to release the connection of the multiplate clutch 413 (left hand in the figure). The bearing 499 is arranged between the pressure plate 497 and the cam ring 517 to insulate the rotation of the pressure plate 497 from the cam ring 517, preventing a malfunction of the ball cam 431.

The thrust force of the ball cam 431 is applied on the clutch casing 419 (an inner wall of the transfer casing 411) through the intermediary of the cam ring 517, the bearing 499, the pressure plate 497, the multiplate clutch 413, the clutch housing 423 and the bearing 499. While, a reaction force of the ball cam 431 is applied on the cover 417 (the inner wall of the transfer casing 411) through a cam ring 523.

In addition to an interrupting operation of the coupling 619, the controller carries out activation of the electrical motor 489, its shutdown, its counterrotating, etc. When activating the electrical motor 489, its rotation is reduced by the reduction gear assemblies 491, 493 (i.e. to increase a motor torque) to operate the ball cam 431. As a result, due to a cam thrust force, the bearing 499 and the pressure plate 497 move to the right in the axial direction, so that the multiplate clutch 413 is fastened under pressure to limit the differential motion of the rear differential 607. Additionally, the controller controls a rotating angle of the electrical motor 489 (i.e. cam thrust force of the ball cam 431) to adjust a limited-slip differential force and subsequently stops the electrical motor 489.

When reversing the electrical motor 489 from the above condition, the cam ring 517 rotates in the opposite direction to disappear the cam thrust force of the ball cam 431, so that the fastening of the multiplate clutch 413 and the limited-slip differential operation of the rear differential 607 are cancelled and thereafter, the operation of the electrical motor 489 is stopped.

### [Effect of Transfer 401]

According to the first embodiment, since the transfer 401 has the multiplate clutch 413 (the limited-slip differential mechanism) arranged in the transfer casing 411, there is no need to allow the transmission casing 635 to have a built-in limited-slip differential mechanism, avoiding a rise in manufacturing cost with no need of modifying the transmission casing 635 to a large-size body.

In this way, as the third embodiment is not accompanied with the large-sized transmission casing, it is possible to provide a compact torque transmission apparatus including the multiplate clutch 413 (the limited-slip differential mechanism), that is, a torque transmission apparatus comprising the transfer 401 and the transmission 603. The so-constructed torque transmission apparatus is suitable for a four-wheel-drive vehicle based on not only FF (front-engine front-drive) vehicle but MR (midship-engine rear-drive) vehicle and RR (rear-engine rear drive) vehicle.

Additionally, with no modification in the transmission casing 635, it can be converted to the other torque transmission apparatuses, accomplishing low-cost production of the apparatuses.

Further, as the oil enclosed in the transfer casing 411 is shared for the change-direction gear assembly 405, the gear drive mechanism 407, the multiplate clutch 413 and the reduction gear assemblies 491, 493, there is no need of preparing different oils for respective elements.

Still further, since the change-direction gear assembly 5 and the gear drive mechanism 407 are arranged in a space 421 between the transfer casing body 415 of the transfer casing 411 and the cover 417 while the multiplate clutch 413 and the reduction gear assemblies 491, 493 are arranged in a space 422 between the cover 417 and the clutch casing 419, the change-direction gear assembly 405 and the multiplate clutch 413 can be assembled independently of each other and additionally, it becomes possible to easily attach and detach the multiplate clutch 413, the reduction gear assemblies 491, 493 and the electrical motor 433 to and from the change-direction gear assembly 405 without exerting an influence on it. Accordingly, it is possible to determine the presence/absence of the multiplate clutch 413 (the limited-slip differential mechanism) by only modifying minimum members, allowing its applications to be expanded that much.

Since the multiplate clutch 413 (the clutch housing 423) is supported by the inner circumference of the end portion of the transfer casing 411 (the clutch casing 419), it becomes easier to put on and take off the multiplate clutch 413.

With the above-mentioned supporting structure where the hollow shaft 403 is supported by the transfer casing 411 through the bearings 425, 427 while supporting the clutch hub 429 of the multiplate clutch 413, the supporting form of the hollow shaft 403 and the clutch hub 429 becomes strong that much, whereby both performance and durability of the multiplate clutch 413 can be maintained normally.

As shown in Fig. 7, the transfer 401 of the embodiment is constructed so that the inner wall (i.e. the clutch casing 419 and the cover 417) of the transfer casing 411 receives the cam thrust force and the cam reactive force produced in the ball cam 431, in other words, the cam thrust force and the cam reactive force do not exert an influence on the outside of the clutch casing 419 and the cover 417. In addition to the structure, as the transfer 401 is adapted so as to insulate these thrust forces from the change-direction gear assembly 405 (meshing part between the bevel gears 457, 459) and the gear drive mechanism 407 (respective meshing parts of the gears 465, 467, 469), these gears 457, 459, 465, 467, 469 are maintained in terms of meshing condition, durability, performance and so on, normally.

Again, as the pin 507 supporting the large-diametral gear 505 of the reduction gear assembly 491 is arranged inside the outer circumference of the electrical motor 489, there is no need of enlarging the diameter of the large-diametral gear 505 unnecessarily in order to avoid an interference of the electrical motor 489 with the pin 507, the reduction gear assembly 491 is formed lightly and compactly. Thus, this arrangement allows the electrical motor 489 to be positioned more inwardly in the radial direction, so that the transfer 401 can be downsized to improve its "in-vehicle" loading easiness.

Again, as the through-hole 511 is positioned inside the outer circumference of the electrical motor 489, it serves to prevent the pin 103 and the plug 115 from falling down. Thus, there is no need of providing fallout-proof members for these elements, so that the number of components of the transfer 1 and its manufacturing cost are together reduced with an improvement in weight saving.

### [Other Embodiments]

As for the limited-slip differential mechanism, without being limited to the above-mentioned mechanism adopting such an externally-controllable multiplate clutch (so-called "active-type" mechanism), the mechanism may be formed by a so-called "passive-type" mechanism adopting, as its operative trigger, a difference in relative rotation between two rotating shafts, a magnitude of input torque and so on. As the passive-type limited-slip differential mechanism, for instance, there are viscous coupling, rotary blade coupling, coupling combining an oil pump with a multiplate clutch, etc.

Additionally, the above-mentioned embodiments may be modified so that either a hydraulic cylinder or an air cylinder constitutes the "active-type" control actuator in the figures.

Finally, it will be understood by those skilled in the art that the foregoing descriptions are nothing but embodiments and various modifications of the disclosed torque transmission apparatus and therefore, various changes and modifications may be made within the scope of claims.

## Claims

1. A torque transmission apparatus comprising:
an input shaft (3) to which a torque of a motor is inputted;
a torque transmission shaft (7) arranged so as to be relatively rotatable with respect to the input shaft;
an output mechanism (5) that outputs the torque of the input shaft to an outside; a limited-slip differential mechanism (11) that limits a differential motion between the input shaft and the torque transmission shaft; and
an accommodating casing (9) that accommodates the input shaft therein, wherein
the accommodating casing further includes a first casing member (13), a second casing member (15) and a third casing member (17) arranged on the opposite side of the first casing member through the second casing member in an axial direction of the input shaft, the first casing member and the second casing member defining a first spatial part (19) for accommodating the output mechanism therein, the second casing member and the third casing member defining a second spatial part (20) for accommodating the limited-slip differential mechanism therein, **characterized in that**
the input shaft (3) has a spline part (51) at one axial end and is connected to a hollow shaft (337) of a differential casing (333) of a first differential (307) arranged in a transmission casing (335) to transmit a drive torque to left and right wheels (313,315), the input shaft (3, 403) being also supported by the first casing member (13) and the second casing member (15) through a pair of bearing (23, 25), and
the limited-slip differential mechanism (11) is arranged between the other axial end of the input shaft and the torque transmission shaft (7) connected to one side gear (339) of the first differential,

2. The torque transmission apparatus of Claim 1, wherein
the accommodating casing is provided, between the first spatial part and the second spatial part, with an opening (81) allowing a flowage of oil.

3. The torque transmission apparatus of Claim 1 or 2, wherein
the limited-slip differential mechanism includes a first rotating member (21) on one side and a second rotating member (27) on the other side, and
the first rotating member of the limited-slip differential mechanism is supported by an inner circumference of an end portion of the accommodating casing.

4. The torque transmission apparatus of claim 1, 2 or 3, wherein the limited-slip differential mechanism includes a first rotating member (21) on one side and a second rotating member (27) on the other side,
the input shaft is supported by the accommodating casing through a bearing (25), and the second rotating member of the limited-slip differential mechanism is supported by the input shaft.

5. The torque transmission apparatus of any one of Claims 1 and 4, further comprising a cam mechanism (29) that operates the limited-slip differential mechanism, wherein
the accommodating casing is formed so that an inner wall thereof receives a cam thrust force of the cam mechanism.

6. The torque transmission apparatus of claim 1, wherein the limited-slip differential mechanism has an actuator (33) for controlling the torque of the motor, and
the actuator is supported by an outer circumference of the third casing member and also positioned on a rear side of the input shaft in a projection plane of the third casing member in the direction of vehicle's width.

7. The torque transmission apparatus of claim 6, wherein the output mechanism includes an output shaft (31) perpendicular to the input shaft,
the first casing member has an extended part (35) extending toward the orthogonal axis, and
the actuator is arranged in an overlapping area between an outside area of the third casing member and an outside area of the extended part.

8. The torque transmission apparatus of Claim 6 or 7, wherein
the actuator has the cam mechanism,
the limited-slip differential mechanism has a frictional clutch joined on receipt of a thrust force produced in the cam mechanism, and
a reactive thrust force produced in the cam mechanism is received by the second casing member.

9. The torque transmission apparatus of claim 1, wherein the limited-slip differential mechanism includes an actuator for controlling the torque of the motor and a frictional clutch,
the actuator is arranged so as to oppose a wall part of the second casing
member on the side of one end of the third casing member, the actuator being restricted from rotating, and
the frictional clutch is arranged on the side of the other end of the third casing member.

10. The torque transmission apparatus of claim 1, wherein
the limited-slip differential mechanism is supported by the input shaft through a connecting spline part in a radial direction, the input shaft having one end supported by the second casing member through a bearing, and
the limited-slip differential mechanism is supported, on the side of another end, by the third casing member through a bearing.

## Patentansprüche

1. Eine Drehmomentübertragungsvorrichtung, aufweisend:
eine Eingangswelle (3), der ein Drehmoment eines Motors zugeführt wird,
eine Drehmomentübertragungswelle (7), die angeordnet ist, um bezüglich der Eingangswelle relativ drehbar zu sein,
einen Ausgangsmechanismus (5), der das Drehmoment der Eingangswelle zu einer Außenseite hin abgibt,
einen Sperrdifferentialmechanismus (11), der eine Differentialbewegung zwischen der Eingangswelle und der Drehmomentübertragungswelle beschränkt, und
ein Aufnahmegehäuse (9), das die Eingangswelle darin aufnimmt, wobei
das Aufnahmegehäuse ferner aufweist: ein erstes Gehäuseelement (13), ein zweites Gehäuseelement (15) und ein drittes Gehäuseelement (17), das durch das zweite Gehäuseelement in einer Axialrichtung der Eingangswelle auf der dem ersten Gehäuseelement entgegengesetzten Seite angeordnet ist, wobei das erste Gehäuseelement und das zweite Gehäuseelement einen ersten räumlichen Abschnitt (19) zum darin Aufnehmen des Ausgangsmechanismus definieren, das zweite Gehäuseelement und das dritte Gehäuseelement einen zweiten räumlichen Abschnitt (20) zum darin Aufnehmen des Sperrdifferentialmechanismus definieren, **dadurch gekennzeichnet, dass**
die Eingangswelle (3) an einem axialen Ende einen Profilabschnitt (51) aufweist und mit einer Hohlwelle (337) eines Differentialgehäuses (333) eines ersten Differentials (307) verbunden ist, das in einem Getriebegehäuse (335) angeordnet ist, um ein Antriebsdrehmoment auf ein linkes und ein rechtes Rad (313, 315) zu übertragen, wobei die Eingangswelle (3, 403) auch durch das erste Gehäuseelement (13) und das zweite Gehäuseelement (15) durch ein Paar von Lagern (23, 25) abgestützt ist, und
der Sperrdifferentialmechanismus (11) zwischen dem anderen axialen Ende der Eingangswelle und der Drehmomentübertragungswelle (7) angeordnet ist, die mit einem Achswellenrad (339) des ersten Differentials verbunden ist.

2. Die Drehmomentübertragungsvorrichtung gemäß Anspruch 1, wobei
das Aufnahmegehäuse zwischen dem ersten räumlichen Abschnitt und dem zweiten räumlichen Abschnitt mit einer Öffnung (81) versehen ist, die ein Strömen von Öl zulässt.

3. Die Drehmomentübertragungsvorrichtung gemäß Anspruch 1 oder 2, wobei
der Sperrdifferentialmechanismus auf der einen Seite ein erstes Drehelement (21) und auf der anderen Seite ein zweites Drehelement (27) aufweist, und
das erste Drehelement des Sperrdifferentialmechanismus durch einen Innenumfang eines Endabschnitts des Aufnahmegehäuses abgestützt ist.

4. Die Drehmomentübertragungsvorrichtung gemäß Anspruch 1, 2 oder 3, wobei der Sperrdifferentialmechanismus auf der einen Seite ein erstes Drehelement (21) und auf der anderen Seite ein zweites Drehelement (27) aufweist,
die Eingangswelle durch das Aufnahmegehäuse durch ein Lager (25) abgestützt ist, und
das zweite Drehelement des Sperrdifferentialmechanismus durch die Eingangswelle abgestützt ist.

5. Die Drehmomentübertragungsvorrichtung gemäß irgendeinem der Ansprüche 1 und 4, ferner einen Nockenmechanismus (29) aufweisend, der den Sperrdifferentialmechanismus betätigt, wobei
das Aufnahmegehäuse derart ausgebildet ist, dass eine Innenwand davon eine Nockenschubkraft des Nockenmechanismus aufnimmt.

6. Die Drehmomentübertragungsvorrichtung gemäß Anspruch 1, wobei der Sperrdifferentialmechanismus einen Aktor (33) zum Steuern des Drehmoments des Motors aufweist, und
der Aktor durch einen Außenumfang des dritten Gehäuseelements abgestützt ist und ferner in einer Projektionsebene des dritten Gehäuseelements in der Richtung der Fahrzeugbreite an einer Rückseite der Eingangswelle positioniert ist.

7. Die Drehmomentübertragungsvorrichtung gemäß Anspruch 6, wobei der Ausgangsmechanismus eine Ausgangswelle (31) senkrecht zu der Eingangswelle aufweist,
das erste Gehäuseelement einen Erweiterungsabschnitt (35) aufweist, der sich in Richtung zu der orthogonalen Achse erstreckt, und
der Aktor in einem Überlappungsbereich zwischen einem Außenbereich des dritten Gehäuseelements und einem Außenbereich des Erweiterungsabschnitts angeordnet ist.

8. Die Drehmomentübertragungsvorrichtung gemäß Anspruch 6 oder 7, wobei
der Aktor den Nockenmechanismus aufweist,
der Sperrdifferentialmechanismus eine Reibungskupplung aufweist, die beim Aufnehmen einer in dem Nockenmechanismus erzeugten Schubkraft angeschlossen wird, und
eine in dem Nockenmechanismus erzeugte Reaktions-Schubkraft durch das zweite Gehäuseelement aufgenommen wird.

9. Die Drehmomentübertragungsvorrichtung gemäß Anspruch 1, wobei der Sperrdifferentialmechanismus einen Aktor zum Steuern des Drehmoments des Motors und eine Reibungskupplung aufweist,
der Aktor angeordnet ist, um einem Wandabschnitt des zweiten Gehäuseelements auf der Seite von einem Ende des dritten Gehäuseelements entgegengesetzt zu sein, wobei ein Drehen des Aktors beschränkt ist, und
die Reibungskupplung auf der Seite des anderen Endes des dritten Gehäuseelements angeordnet ist.

10. Die Drehmomentübertragungsvorrichtung gemäß Anspruch 1, wobei
der Sperrdifferentialmechanismus von der Eingangswelle durch einen Verbindungsprofilabschnitt in einer radialen Richtung abgestützt ist, ein Ende der Eingangswelle durch das zweite Gehäuseelement durch ein Lager abgestützt ist, und
der Sperrdifferentialmechanismus auf der Seite eines anderen Endes durch das dritte Gehäuseelement durch ein Lager abgestützt ist.

## Revendications

1. Appareil de transmission de couple comprenant :
un arbre d'entrée (3) auquel est appliqué un couple d'un moteur ;
un arbre de transmission de couple (7) agencé de façon à être relativement rotatif par rapport à l'arbre d' entrée ;
un mécanisme de sortie (5) qui délivre en sortie le couple de l'arbre d'entrée vers un extérieur ;
un mécanisme de différentiel à glissement limité (11) qui limite un mouvement différentiel entre l'arbre d'entrée et l'arbre de transmission de couple ; et
un carter de réception (9) qui reçoit à l'intérieur l'arbre d'entrée, dans lequel :
le carter de réception comprend en outre un premier élément de carter (13), un deuxième élément de carter (15) et un troisième élément de carter (17) agencé du côté opposé du premier élément de carter par l'intermédiaire du deuxième élément de carter dans une direction axiale de l'arbre d'entrée, le premier élément de carter et le deuxième élément de carter définissant une première partie spatiale (19) destinée à recevoir à l'intérieur le mécanisme de sortie, le deuxième élément de carter et le troisième élément de carter définissant une seconde partie spatiale (20) destinée à recevoir à l'intérieur le mécanisme de différentiel à glissement limité, **caractérisé en ce que** :
l'arbre d'entrée (3) présente une partie de cannelure (51) située au niveau d'une extrémité axiale et est relié à un arbre creux (337) d'un carter de différentiel (333) d'un premier différentiel (307) agencé dans un carter de transmission (335) de façon à transmettre un couple d'entraînement aux roues gauche et droite (313, 315), l'arbre d'entrée (3, 403) étant également supporté par le premier élément de carter (13) et le deuxième élément de carter (15) par l'intermédiaire d'une paire de roulements (23, 25) ; et
le mécanisme de différentiel à glissement limité (11) est agencé entre l'autre extrémité axiale de l'arbre d'entrée et l'arbre de transmission de couple (7) relié à un planétaire de différentiel (339) du premier différentiel.

2. Appareil de transmission de couple selon la revendication 1, dans lequel :
le carter de réception est doté, entre la première partie spatiale et la seconde partie spatiale, d'une ouverture (81) qui permet une circulation d'huile.

3. Appareil de transmission de couple selon la revendication 1 ou 2, dans lequel :
le mécanisme de différentiel à glissement limité comprend un premier élément rotatif (21) situé d'un côté et un second élément rotatif (27) situé de l'autre côté ; et
le premier élément rotatif du mécanisme de différentiel à glissement limité est supporté par une circonférence intérieure d'une partie d'extrémité du carter de réception.

4. Appareil de transmission de couple selon la revendication 1, 2 ou 3, dans lequel :
le mécanisme de différentiel à glissement limité comprend un premier élément rotatif (21) situé d'un côté et un second élément rotatif (27) situé de l'autre côté ;
l'arbre d'entrée est supporté par le carter de réception par l'intermédiaire d'un roulement (25) ; et
le second élément rotatif du mécanisme de différentiel à glissement limité est supporté par l'arbre d'entrée.

5. Appareil de transmission de couple selon l'une quelconque des revendications 1 et 4, comprenant en outre un mécanisme de came (29) qui actionne le mécanisme de différentiel à glissement limité, dans lequel :
le carter de réception est formé de telle sorte qu'une paroi intérieure de celui-ci reçoit une force de poussée de came du mécanisme de came.

6. Appareil de transmission de couple selon la revendication 1, dans lequel :
le mécanisme de différentiel à glissement limité présente un actionneur (33) destiné à commander le couple du moteur ; et
l'actionneur est supporté par une circonférence extérieure du troisième élément de carter et est également positionné sur un côté arrière de l'arbre d'entrée dans un plan de projection du troisième élément de carter dans le sens de la largeur du véhicule.

7. Appareil de transmission de couple selon la revendication 6, dans lequel :
le mécanisme de sortie comprend un arbre de sortie (31) perpendiculaire à l'arbre d'entrée ;
le premier élément de carter présente une partie étendue (35) qui s'étend vers l'axe orthogonal ; et
l'actionneur est agencé dans une zone de chevauchement située entre une zone extérieure du troisième élément de carter et une zone extérieure de la partie étendue.

8. Appareil de transmission de couple selon la revendication 6 ou 7, dans lequel :
l'actionneur présente le mécanisme de came ;
le mécanisme de différentiel à glissement limité présente un embrayage à friction enclenché lors de la réception d'une force de poussée produite dans le mécanisme de came ; et
une force de poussée réactive produite dans le mécanisme de came est reçue par le deuxième élément de carter.

9. Appareil de transmission de couple selon la revendication 1, dans lequel :
le mécanisme de différentiel à glissement limité comprend un actionneur destiné à commander le couple du moteur et un embrayage à friction ;
l'actionneur est agencé de façon à être opposé à une partie de paroi du deuxième élément de carter du côté d'une extrémité du troisième élément de carter, l'actionneur étant restreint dans sa rotation ; et
l'embrayage à friction est agencé du côté de l'autre extrémité du troisième élément de carter.

10. Appareil de transmission de couple selon la revendication 1, dans lequel :
le mécanisme de différentiel à glissement limité est supporté par l'arbre d'entrée par l'intermédiaire d'une partie de cannelure de liaison dans une direction radiale, l'arbre d'entrée présentant une extrémité supportée par le deuxième élément de carter par l'intermédiaire d'un roulement ; et
le mécanisme de différentiel à glissement limité est supporté, du côté d'une autre extrémité, par le troisième élément de carter par l'intermédiaire d'un roulement.
